# FASCICULE DE BREVET EUROPEEN

(11) **EP 3 621 171 B1**
(45) Date de publication et mention de la délivrance du brevet: **08.04.2026**
(21) Numéro de dépôt: 19194158.2
(22) Date de dépôt: 28.08.2019
(51) Int. Cl.: H02J 4/00, H02G 3/00, H02J 13/00

(54) **INSTALLATION ÉLECTRIQUE À REDÉPLOIEMENT RAPIDE**
SCHNELLE WIEDERAUFBAUUNG DER ELEKTRISCHEN INSTALLATION
FAST REDEPLOYING ELECTRICAL INSTALLATION

(30) Priorité: 05.09.2018 FR 1857977
(43) Date de publication de la demande: 11.03.2020
(73) Titulaire: Borderes, Eric, 77115 Sivry-Courtry (FR)
(72) Inventeur: Borderes, Eric, 77115 Sivry-Courtry (FR)
(74) Mandataire: Cabinet Boettcher

(56) Documents cités:
- EP-A1- 0 534 538
- WO-A1-2015/172857
- US-A1- 2008 197 702
- SCHNEIDER-ELECTRIC: "schneider-electric", 1 January 2016 (2016-01-01), XP055574248, Retrieved from the Internet <URL:http://77.221.237.111/flipbooks/Canalis_20_to_1000_A_Catalogue_2016/content/DEBU022EN.pdf> [retrieved on 20190326]
- SCHNEIDER ELECTRIC: "Schneider Electric Brands AS-i Bus CONTENTS", 1 January 2000 (2000-01-01), XP55907096, Retrieved from the Internet <URL:https://stevenengineering.com/tech_support/PDFs/45PLASI.pdf> [retrieved on 20220330]

## Description

La présente invention concerne le domaine de l'électricité et plus particulièrement les installations électriques de sites industriels ou tertiaires.

### ETAT DE LA TECHNIQUE

Il existe des sites de production comportant des unités consommatrices de courant, telles que des moteurs, des électrovannes et autres actionneurs..., qui sont alimentées et pilotées de manière centralisée depuis une ou plusieurs armoires, dites armoires process, regroupant des automates programmables commandant les unités consommatrices de courant. Les aciéries, cimenteries, raffineries, stations de traitement d'eau... constituent par exemple de tels sites de production, qui mettent ici plus particulièrement en œuvre un processus continu de production.

Un tel site de production comporte une installation électrique, agencée pour assurer une distribution électrique centralisée, comprenant généralement une cellule moyenne ou haute tension (HTA) reliée au réseau moyenne ou haute tension d'un fournisseur d'électricité, deux transformateurs reliés en parallèle d'une part à la cellule haute tension et d'autre part à un tableau général basse tension, deux armoires process reliées au tableau général basse tension, des unités consommatrices de courant reliés chacune à l'une des armoires process. Chaque unité consommatrice de courant est reliée à chacune des armoires process par un câble dédié de puissance et un câble dédié de commande qui s'étendent depuis l'armoire process jusqu'à l'unité consommatrice. Il en résulte qu'une telle installation électrique comporte un très grand nombre de câbles qui cheminent le long des bâtiments dans des chemins de câbles dans lesquels les câbles sont répartis en fonction de la puissance maximale qu'ils peuvent transmettre.

Un sinistre de grande ampleur, comme par exemple un incendie touchant l'une des armoires process, oblige à l'arrêt du site de production, ce qui engendre des conséquences financières importantes et parfois des conséquences environnementales. Il est donc primordial de pouvoir redémarrer l'installation le plus rapidement possible. Cependant, le redémarrage de l'installation sinistrée nécessite le remplacement de plusieurs kilomètres de câbles et éventuellement des armoires process, opération longue qui impacte fortement et le coût du redémarrage et le temps d'indisponibilité de l'installation.

Il est connu par ailleurs, par exemple dans les sites de production de l'industrie manufacturière, des installations électriques assurant une distribution électrique répartie et comprenant des canalisations préfabriquées qui comprennent des barres électriquement conductrices (ci-après dénommées « barres conductrices ») et sont utilisées pour transmettre le courant de puissance depuis l'arrivée de courant du site de production jusqu'aux unité consommatrices de courant qui sont raccordées par un câble de puissance aux barres conductrices les plus proches. La commande des unités consommatrices de courant est effectuée localement sur chacune des unités consommatrices de courant. De telles canalisations préfabriquées sont produites par la société SCHNEIDER ELECTRIC sous la marque CANALIS.

### OBJET DE L'INVENTION

Un but de l'invention est de fournir un moyen pour permettre, après un sinistre, un redémarrage rapide des sites de production de relativement grandes dimensions.

### BREF EXPOSE DE L'INVENTION

A cet effet, on prévoit, selon l'invention, une installation électrique conforme à la revendication 1.

Ainsi, les unités consommatrices sont reliées aux deux mêmes canalisations préfabriquées connectées au tableau général basse tension (une canalisation préfabriquée de puissance et une canalisation préfabriquée de commande) de sorte que, en cas d'incendie de ce tableau, seules les canalisations préfabriquées endommagées et connectées au tableau seront à changer et non pas des faisceaux de câbles reliant directement chacune des unités consommatrices au tableau général basse tension comme c'était le cas auparavant. Ceci permet de limiter la quantité de câbles nécessaires au fonctionnement de l'installation. L'installation est en outre beaucoup plus simple facilitant son exploitation et sa maintenance. Il en résulte un énorme gain de temps autorisant un redémarrage rapide de l'installation et des économies substantielles.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :

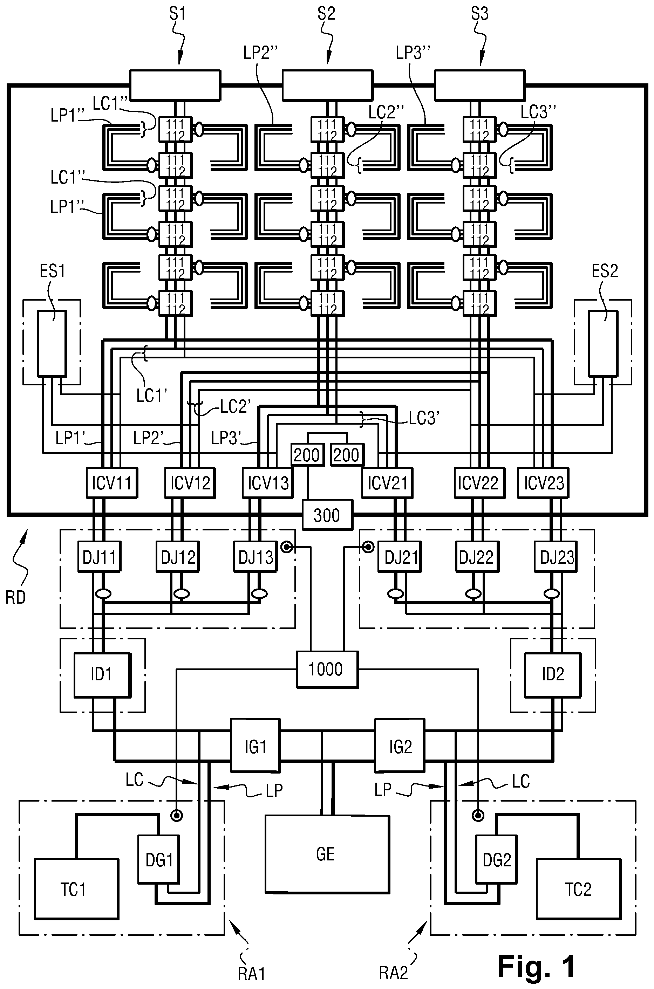

- la figure 1 est une vue générale du circuit électrique d'une installation selon l'invention ;
- la figure 2 est une vue schématique en perspective partielle de cette installation ;

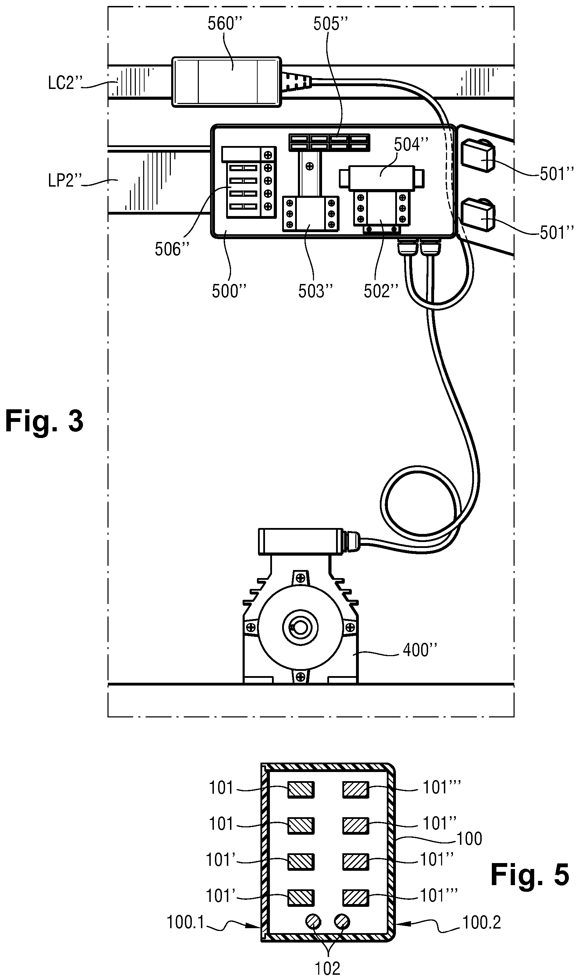

- la figure 3 est une vue schématique en élévation d'un coffret de raccordement d'une première unité consommatrice au réseau ;

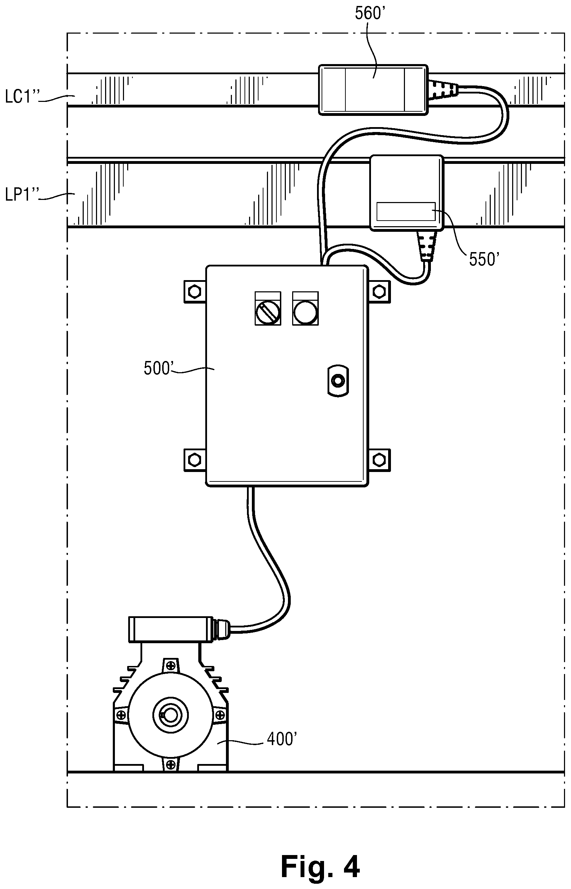

- la figure 4 est une vue schématique en élévation d'un coffret de raccordement d'une deuxième unité consommatrice au réseau ;
- la figure 5 est une vue schématique d'une canalisation préfabriquée de commande en coupe selon le plan V de la figure 2 ;
- la figure 6 est une vue de détail en perspective d'un tronçon de ladite canalisation préfabriquée de commande, le tronçon étant pourvu d'une ouverture pour la mise en œuvre d'un premier mode de dérivation ;
- les figures 7, 8 et 9 sont des vues schématiques de derrière respectivement d'un premier, d'un deuxième et d'un troisième capot de fermeture de la dite ouverture ;
- la figure 10 est une vue schématique d'un réseau de communication établi à partir d'une des lignes de commande ;

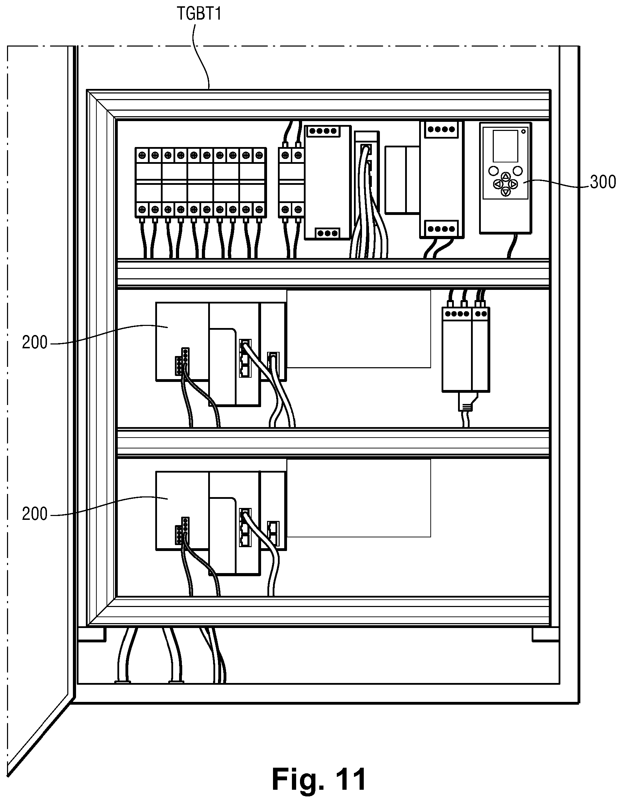

- la figure 11 est une vue schématique partielle et en élévation d'un tableau général basse tension de l'installation selon l'invention ;

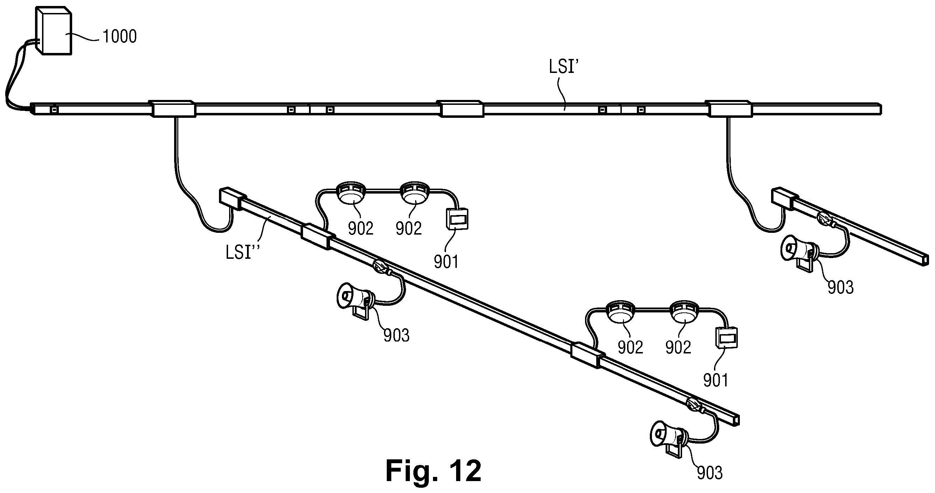

- la figure 12 est une vue partielle d'un dispositif d'alerte incendie selon l'invention ;
- la figure 13 est une vue en perspective de la partie inférieure d'un module de raccordement pour la mise en œuvre d'un deuxième mode de dérivation ;
- les figures 14 et 15 sont des vues en perspective de ce module de raccordement pendant et après la réalisation d'une dérivation ;
- la figure 16 est une vue schématique partielle en perspective d'une installation selon une variante de l'invention, les canalisations préfabriquées étant pourvues d'un carénage ici en position abaissée ;
- la figure 17 est une vue schématique partielle en perspective de cette installation, le carénage étant en position relevée ;
- la figure 18 est une vue en coupe selon la ligne XVII-XVII de la figure 16.

### DESCRIPTION DETAILLEE DE L'INVENTION

En référence aux figures, l'invention est ici décrite en application à une station d'épuration des eaux usées comprenant ici trois ateliers de traitements successifs des effluents et par exemple un atelier de prétraitement S1, un atelier de débouage et désodorisation S2, un atelier de traitement biologique S3.

L'installation électrique selon l'invention comprend deux réseaux d'arrivée RA1, RA2 qui sont reliés d'une part à une arrivée de courant et d'autre part à un réseau de distribution RD.

Chaque réseau d'arrivée RA1, RA2 comprend un transformateur électrique couplable TC1, TC2 relié d'une part au réseau électrique d'un distributeur d'énergie et d'autre part à un disjoncteur général DG1, DG2, et est agencé pour délivrer une tension de 400V environ. Depuis chaque disjoncteur général DG1, DG2 partent une ligne de commande LC et une ligne de puissance LP qui sont reliées d'une part à un tableau général basse tension TGBT 1, TGBT2 du réseau de distribution RD et d'autre part à un interrupteur général IG1, IG2. Les interrupteurs généraux IG1, IG2 sont reliés entre eux et à un groupe électrogène GE commun par une ligne de puissance LP et une ligne de commande LC de telle manière que :
- le transformateur électrique couplable TC1 puisse être relié également au tableau général basse tension TGBT2 ;
- le transformateur électrique couplable TC2 puisse être relié également au tableau général basse tension TGBT1 ;
- le groupe électrogène GE puisse être relié à l'un et/ou l'autre des tableaux généraux basse tension TGBT1, TGBT2.

Les transformateurs électriques couplables sont distants l'un de l'autre (par exemple dans deux bâtiments différents) de même que les tableaux généraux basse tension. On comprend qu'ainsi le risque qu'un sinistre touchant l'un des transformateurs ou tableaux se propage à l'autre est faible.

Chaque tableau général basse tension TGBT1, TGBT2 a au moins une entrée ou tête formée par un interrupteur débrochable ID1, ID2 relié par les lignes LP, LC au disjoncteur général DG1, DG2 et à l'interrupteur général IG1, IG2. Chaque interrupteur débrochable ID1, ID2 est ici agencé pour supporter un courant de 4000 A. De chaque interrupteur débrochable ID1, ID2 partent une ligne de commande LC et une ligne de puissance LP qui sont reliées en parallèle à trois disjoncteurs - DJ11, DJ12, DJ13 et DJ21, DJ22, DJ23 respectivement - supportant chacun 1000 A.

Chaque disjoncteur DJ11, DJ12, DJ13, DJ21, DJ22, DJ23 est relié par une ligne de puissance et une ligne de commande à un interrupteur à coupure visible ICV11, ICV12, ICV13, ICV21, ICV22, ICV23 respectivement. L'interrupteur à coupure visible ICV 11 est connecté par une ligne primaire de commande LC1' et une ligne primaire de puissance LP1' à l'interrupteur à coupure visible ICV 21 ; l'interrupteur à coupure visible ICV 12 est connecté par une ligne primaire de commande LC2' et une ligne primaire de puissance LP2' à l'interrupteur à coupure visible ICV 22 ; l'interrupteur à coupure visible ICV 13 est connecté par une ligne primaire de commande LC3' et une ligne primaire de puissance LP3' à l'interrupteur à coupure visible ICV 23.

La ligne primaire de puissance LP1' comprend une dérivation à laquelle sont connectées des lignes secondaires de puissance LP1'' pour alimenter des unités consommatrices de l'atelier S1. La ligne primaire de puissance LP2' comprend une dérivation à laquelle sont connectées des lignes secondaires de puissance LP2'' pour alimenter des unités consommatrices de l'atelier S2. La ligne primaire de puissance LP3' comprend une dérivation à laquelle sont connectées des lignes secondaires de puissance LP3'' pour alimenter des unités consommatrices de l'atelier S3.

La ligne primaire de commande LC1' comprend une dérivation à laquelle sont connectées des lignes secondaires de commande LC1'' pour piloter les unités consommatrices de l'atelier S1. La ligne primaire de commande LC2' comprend une dérivation à laquelle sont connectées des lignes secondaires de commande LC2'' pour piloter les unités consommatrices de l'atelier S2. La ligne primaire de commande LC3' comprend une dérivation à laquelle sont connectées des lignes secondaires de commande LC3'' pour piloter les unités consommatrices de l'atelier S3.

Les lignes sont formées par des canalisations préfabriquées comprenant un profilé en matériau électriquement isolant dans lesquels s'étendent des conducteurs électriques sous la forme de barres électriquement conductrices ici en métal tel que du cuivre. Les canalisations préfabriquées utilisées pour les lignes de puissance se distinguent de celles utilisées pour les lignes de commande essentiellement par la section des conducteurs électriques qui est plus importante pour les lignes de puissance. Les canalisations préfabriquées utilisables pour la réalisation de l'invention sont par exemple les canalisations préfabriquées produites par la société SCHNEIDER ELECTRIC sous la marque CANALIS.

Plus précisément : les canalisations préfabriquées utilisées pour les lignes primaires de puissance LP1', LP2' et LP3' sont des canalisations CANALIS de type KS ; les canalisations préfabriquées utilisées pour les lignes primaires de commande LC1', LC2' et LC3' sont des canalisations CANALIS de type KBB ; les canalisations préfabriquées utilisées pour les lignes secondaires de puissance LP1'', LP2'' et LP3" sont des canalisations CANALIS de type KN ; les canalisations préfabriquées utilisées pour les lignes secondaires de commande LC1'', LC2" et LC3" sont des canalisations CANALIS de type KBB.

Les canalisations CANALIS de type KS et KN comprennent :
- un profilé ici en métal ;
- deux paires de conducteurs électriques identiques qui s'étendent longitudinalement dans le profilé 100 et qui sont accessibles sur une des faces principales opposées du profilé via des ouvertures ménagées à intervalles réguliers dans ladite face principale.

Les canalisations CANALIS de type KBB comprennent :
- un profilé 100 en matériau électriquement isolant ou non (par exemple en métal) ;
- quatre paires de conducteurs électriques 101, 101', 101'', 101‴ identiques s'étendant longitudinalement dans le profilé 100, une paire de conducteurs électriques 101 et une paire de conducteurs électriques 101' étant accessibles par des ouvertures ménagées à intervalles réguliers le long de la face principale 100.1, une paire de conducteurs électriques 101" et une paire de conducteurs électriques 101‴ étant accessibles par des ouvertures ménagées à intervalles réguliers le long de la face principale 100.2 opposée à la face principale 100.1 ;
- une paire de conducteurs électriques 102 utilisée ici pour télécommander des blocs d'éclairage de sécurité (pour commander l'allumage de ces blocs d'éclairage de sécurité en cas d'incendie).

Les conducteurs 101' situés du côté de la face principale 100.1 des canalisations préfabriquées des lignes primaires de commande LC1', LC2', LC3' sont reliées :
- au voisinage de leur extrémité raccordée aux interrupteurs à coupure visible ICV11, ICV12, ICV13, à un ensemble de secours ES1 comportant un chargeur et un accumulateur électrique formant un premier dispositif d'accumulation d'énergie à une tension de 24V ;
- au voisinage de leur extrémité raccordée aux interrupteurs à coupure visible ICV21, ICV22, ICV23, à un ensemble de secours ES2 comportant un chargeur et un accumulateur électrique formant un deuxième dispositif d'accumulation d'énergie à une tension de 24V.

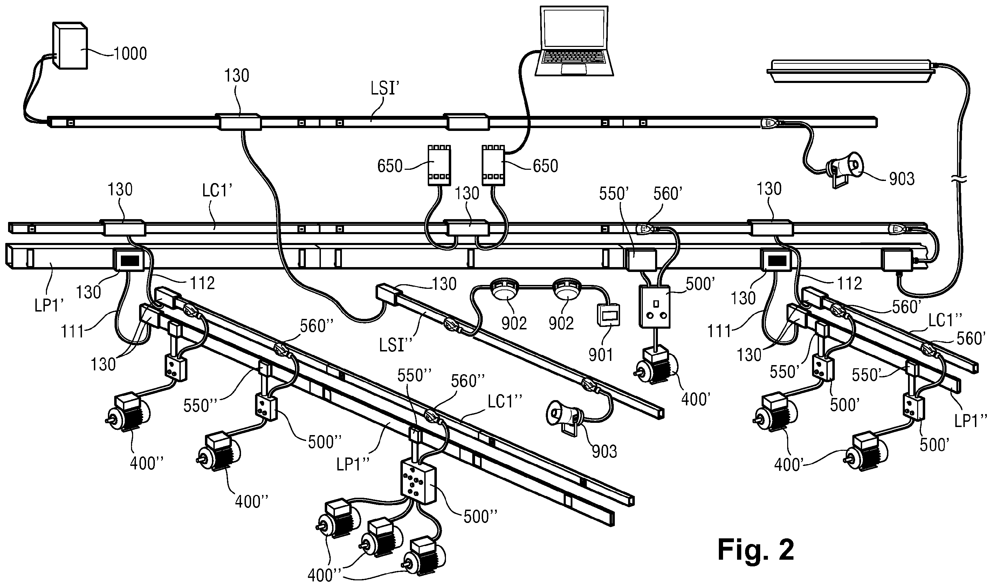

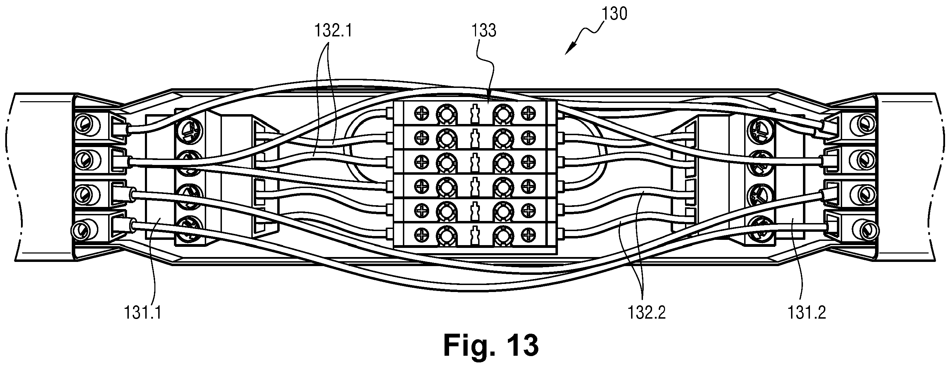

Les conducteurs électriques d'une canalisation préfabriquée sont raccordés aux conducteurs électriques d'une canalisation préfabriquée adjacente par un élément rigide de jonction électrique ou un élément souple de jonction électrique, tel que ceux représentés en 111, 112 sur la figure 2, ayant deux extrémités reliées chacune à un module de raccordement 130 raccordé aux conducteurs électriques d'une des canalisations que doit relier l'élément souple de jonction 111, 112 . Les modules de raccordement 130 et les câbles associés sont décrit ultérieurement en relation avec les figures 13à 15.

Les conducteurs électriques 101' situés du côté de la face principale 100.1 des canalisations préfabriquées des lignes primaires de commande LC1', LC2', LC3' et les conducteurs électriques 101' des canalisations préfabriquées des lignes secondaires de commande LC1'', LC2" , LC3'' forment ainsi un réseau de secours alimenté à une tension de 24 V.

Chaque tableau général basse tension TGBT1, TGBT2 comprend ici un ou plusieurs automates de pilotage 200 (de préférence au moins deux automates redondants) reliés à une interface de communication 300 reliée aux conducteurs électriques 101 situés du côté de la face principale 100.1 des canalisations préfabriquées des lignes primaires de commande LC1', LC2', LC3' formant chaque extrémité des lignes primaires de commande LC1', LC2', LC3'. L'interface de communication 300 comprend un module passerelle associé à un module d'entrée/sortie.

L'installation comprend des unités consommatrices 400', 400'', ici de deux types et symbolisées par des moteurs, qui sont reliées à une des lignes de puissance et à une des lignes de commande.

Chaque unité consommatrice de courant 400' a au moins une entrée de puissance reliée à un coffret de raccordement 500' contenant un ou plusieurs interrupteurs, un contacteur, un disjoncteur général, un disjoncteur pour le moteur, une interface de communication, un porte-fusible, éventuellement un variateur pour l'unité consommatrice 400' ou un relais piloté par une sortie analogique de l'interface de communication... Le variateur ou le relais est raccordé aux conducteurs électriques de la ligne de puissance par un boîtier de raccordement 550' incorporant un porte-fusibles. L'interface de communication est reliée, par un boîtier de raccordement 560', aux conducteurs électriques 101 situés du côté de la face principale 100.1 des canalisations préfabriquées des lignes de commande. Les boîtiers de raccordement 550', 560' comprennent des contacts élastiques formant pince, par exemple en forme de lyre, qui sont engagés chacun sur un des conducteurs électriques de la ligne au travers d'ouvertures réalisées à intervalles régulier le long du profilé correspondant.

Chaque unité consommatrice de courant 400'' a au moins une entrée de puissance reliée à un coffret de raccordement 500'' contenant un ou plusieurs interrupteurs 501", un contacteur 502", un disjoncteur 503" pour le moteur, une interface de communication 504'', un porte-fusible 505", des contacts élastiques formant pince 506'' qui sont engagés chacun sur un des conducteurs électriques de la ligne au travers d'ouvertures réalisées à intervalles régulier le long du profilé correspondant. Le contacteur 502'' est piloté par une sortie analogique de l'interface de communication 504". L'interface de communication 504'' est reliée, par un boîtier de raccordement 560", aux conducteurs électriques 101 situés du côté de la face principale 100.1 des canalisations préfabriquées des lignes de commande. Les boîtiers de raccordement 560'' comprennent des contacts élastiques formant pince, par exemple de type lyre, qui sont engagés chacun sur un des conducteurs électriques de la ligne au travers d'ouvertures réalisées à intervalles régulier le long du profilé correspondant.

Les unités consommatrices 400' et 400" peuvent être reliées aux lignes primaires de puissance et de commande ou aux lignes secondaires de puissance et de commande. On notera sur la figure 2 que plusieurs unités consommatrices de courant 400'' peuvent être raccordées à un même coffret de raccordement 500'' (il en est de même pour les unités consommatrices 400').

Les interfaces de communication, 300 et 504" notamment, sont agencées pour communiquer entre elles par un bus de terrain de type AS-i Safety. Les interfaces de communication sont ici des passerelles de type AS-i AC4S. Les interfaces de communication associées aux unités consommatrices pilotent un relais, un contacteur ou un variateur du boîtier de raccordement auquel est reliée l'entrée de puissance de l'unité consommatrice. Les interfaces de communication sont également agencées pour :
- collecter les informations relatives à l'état de l'unité consommatrice dont par exemple l'état du disjoncteur, la recopie de marche, l'état des commandes locales (commutateur en position automatique, arrêt ou manuel) ...
- allumer des voyants correspondant à l'état de l'unité consommatrice...

Ainsi, chaque unité consommatrice est associée à une interface de communication reliée aux barres conductrices d'une des canalisations préfabriquées des lignes primaires ou secondaires de commande et les automates de pilotage 200 sont reliés à deux des barres conductrices de la canalisation préfabriquée de la ligne primaire du réseau de commande via l'interface de communication 300 pour communiquer via un bus avec les interfaces de communication associées aux unités consommatrices. Les automates 200 sont programmés pour piloter les unités consommatrices de manière à mettre en œuvre le processus de fonctionnement des ateliers S1, S2, S3.

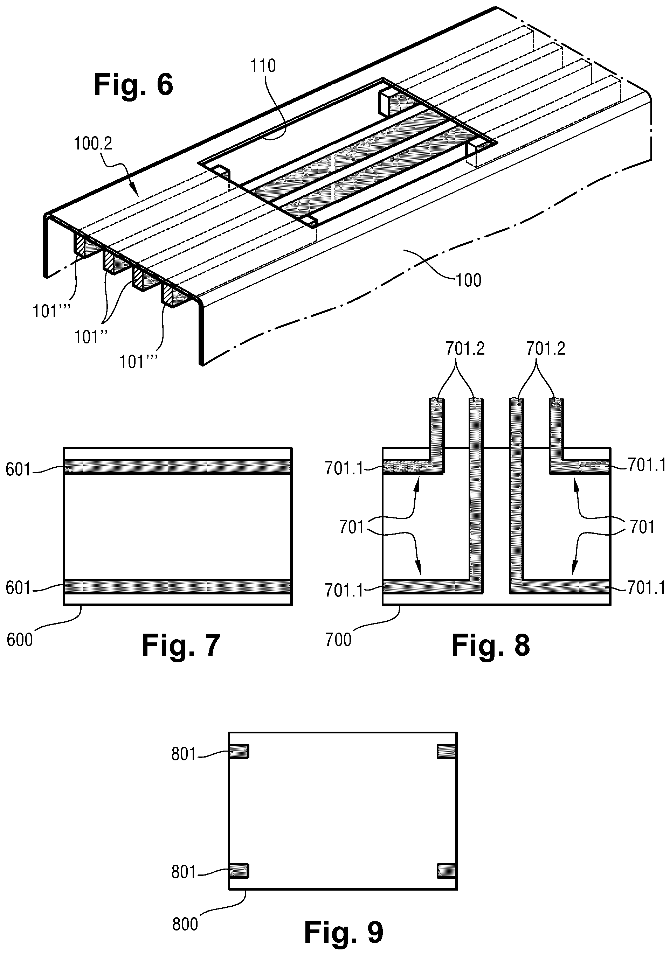

En référence aux figures 6 à 9, les conducteurs électriques jouxtant la face 100.2 des profilés des lignes de commande sont utilisés pour former un réseau Ethernet reliant une interface Ethernet située dans chaque tableau général basse tension TGBT1, TGBT2 à une interface Ethernet située dans le coffret de raccordement d'au moins une des unités consommatrices ayant une carte de communication raccordée à ladite interface Ethernet. La face 100.2 de chaque profilé est pourvue d'ouvertures 110 qui sont réparties à intervalle régulier le long du profilé et qui s'étendent chacune en regard des quatre conducteurs électriques 101", 101‴ dédiés au réseau Ethernet (figure 6). Les deux conducteurs électriques 101‴ présentent une interruption en regard de chaque ouverture et chaque ouverture peut recevoir :
- soit un premier capot 600 (figure 7) comportant deux conducteurs électriques de liaison 601 ayant chacun des extrémités pourvues de connecteurs (non visibles sur la figure 7) pour se raccorder aux extrémités d'un des conducteurs électriques 101''' interrompus à l'aplomb du premier capot 600 pour rétablir la continuité des conducteurs 101‴,
- soit un deuxième capot 700 (figure 8) comportant quatre conducteurs de dérivation 701 ayant chacun une extrémité 701.1 pourvue d'un connecteur (non visibles sur la figure 8) pour être raccordé à une extrémité d'une des conducteurs électriques 101‴ interrompus en regard du deuxième capot 700 et une extrémité 701.2 agencée pour être reliée à une interface Ethernet 720 comportant par exemple un circuit électronique SHDSL,
- soit un troisième capot 800 (figure 9) qui comprend quatre connecteurs 801 et qui est dépourvu de conducteurs de liaison ou de dérivation.

Les connecteurs des capots 600, 700, 800 permettent à la fois la fixation des capots 600, 700, 800 à la canalisation et une connexion électrique pour ce qui concerne les capots 600 et 700.

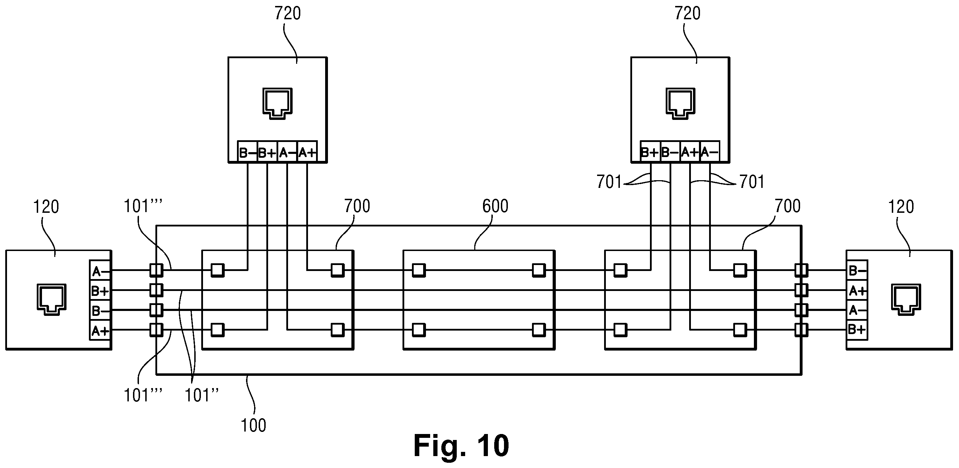

Lorsqu'il n'est pas nécessaire de raccorder une unité consommatrice au réseau Ethernet, l'ouverture est obturée par un capot 600 et, lorsqu'une unité consommatrice doit être raccordée au réseau Ethernet, l'ouverture est obturée par un capot 700. Le réseau informatique de type Ethernet ainsi formé sur les quatre conducteurs électriques 101'', 101‴ situés du côté de la face 100.2 est agencé pour constituer une boucle redondante. On peut voir à la figure 10 un exemple de réseau Ethernet en boucle redondante réalisé conformément à l'invention. Les extrémités des conducteurs électriques 101", 101‴ sont raccordées à des interfaces Ethernets 120 comportant par exemple un circuit électronique SHDSL. Un tel réseau est par exemple utilisable pour remonter aux automates des informations en provenant de variateurs de vitesses pourvus d'interface Ethernet.

Lorsqu'aucun réseau Ethernet n'est nécessaire, les ouvertures 110 sont obturées par les capots 800.

En variante, un autre mode de dérivation est visible sur la figure 2 et les figures 13 à 15. Dans ce mode de dérivation, la boucle comprend un bloc de raccordement électrique 650 qui incorpore une interface TCP/IP et qui est pourvu, d'une part, de connecteurs de raccordement à un module de raccordement 130 aux conducteurs électriques de la canalisation à dériver et, d'autre part, à des connecteurs de liaison externe. Aux connecteurs de liaison externe de ce boîtier de raccordement 650 peut par exemple être raccordé un ordinateur ou tout autre dispositif susceptible d'être raccordé à un réseau TCP/IP.

Chaque module de raccordement 130 est monté soit à une extrémité d'une canalisation soit entre deux tronçons d'une canalisation. Dans ce deuxième cas, le module de raccordement 130 est relié aux conducteurs électriques de chaque tronçon de canalisation par un bornier 131.1, 131.2. Chaque bornier 131.1, 131.2 a des bornes reliés, d'une part, aux conducteurs électriques de la canalisation concernée et, d'autre part, à une extrémité de câbles 132.1, 132.2 ayant une extrémité opposée reliée à un ensemble de connecteurs femelles de jonction généralement désignés en 133 tels que les blocs de jonction à fonction fabriqués par la société PHOENIX sous la référence 3246861. Ici, deux bornes du bornier 131.1 et du bornier 131.2 sont reliées aux deux conducteurs électriques dédiés à un premier réseau SHDSL, deux bornes du bornier 131.1 et du bornier 131.2 sont reliées aux deux conducteurs électriques dédiés à un deuxième réseau SHDSL, deux bornes du bornier 131.1 et du bornier 131.2 sont reliées aux deux conducteurs électriques dédiés au pôle positif de l'alimentation 24 V, deux bornes du bornier 131.1 et du bornier 131.2 sont reliées aux deux conducteurs électriques dédiés au pôle négatif de l'alimentation. Les deux bornes du bornier 131.1 raccordées aux conducteurs électriques du bus AS-i sont reliées deux bornes du bornier 131.2 raccordées aux conducteurs électriques du bus AS-i directement par un câble sans passer par un connecteur femelle de jonction 133.

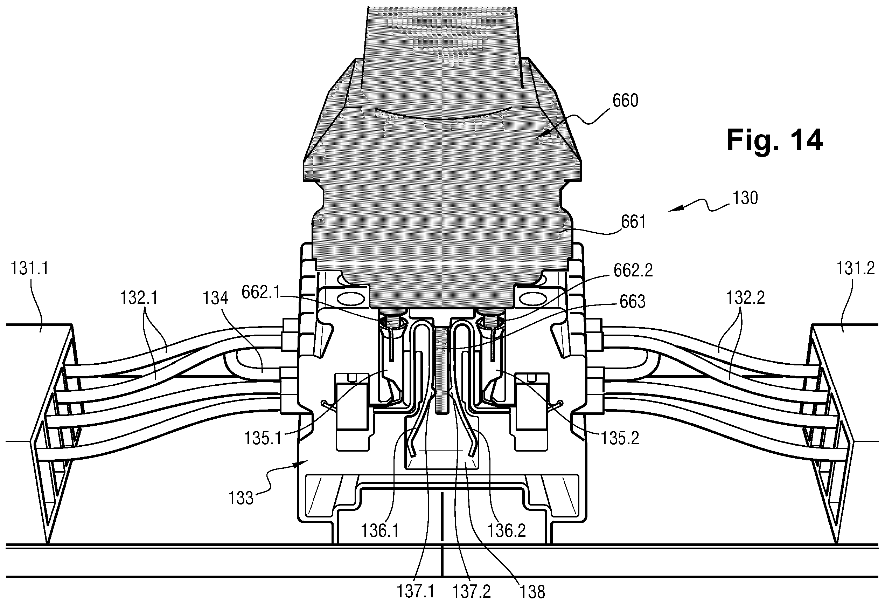

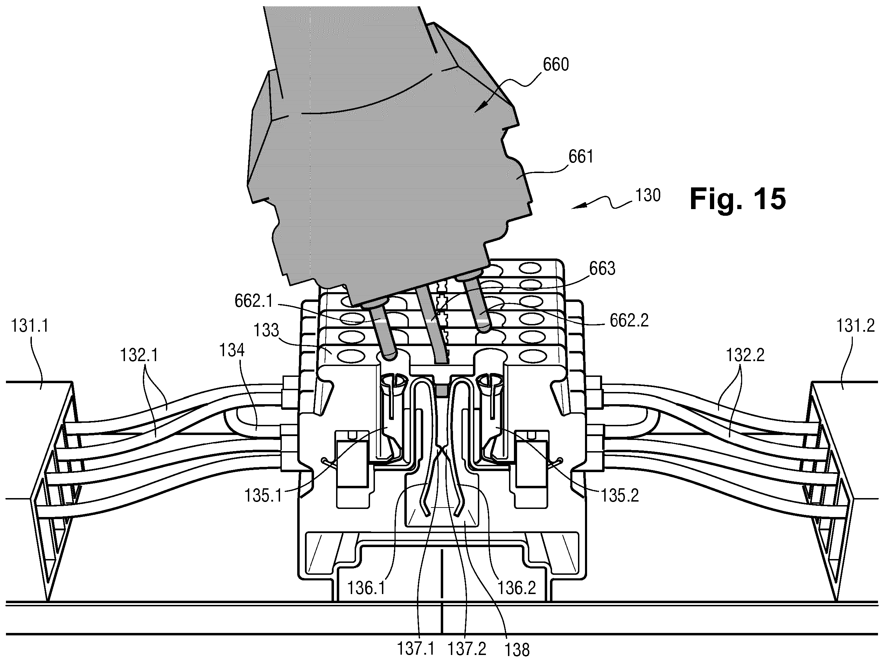

Chaque connecteur femelle de jonction 133 comprend deux bornes reliées chacune, d'une part, à un des câbles 132.1, 132.2 reliés à l'un des borniers 131.1, 131.2 et, d'autre part, à une borne électriquement reliée à une prise femelle 135.1, 135.2. A partir de la borne reliée à chaque prise femelle 135.1, 135.2 s'étend une lame conductrice 136.1, 136.2 ayant un tronçon d'extrémité portant un contact 137.1, 137.2 et s'étendant dans un puits 138. Le puits 138 s'étend entre les prises femelles 135.1, 135.2 parallèlement à celles-ci et le tronçon d'extrémité de la lame conductrice 136.1, 136.2 s'étend en regard du tronçon d'extrémité de la lame conductrice 136.2. Les lames conductrices 136.1, 136.2 sont élastiquement déformables depuis un premier état dans lequel les contacts 137.1, 137.2 sont appliqués l'un contre l'autre assurant une continuité électrique entre les deux bornes du connecteur femelle de jonction 133 (figure 15) vers un deuxième état dans lequel les contacts 137.1, 137.2 sont écartés l'un de l'autre rompant la continuité électrique entre les deux bornes du connecteur femelle de jonction 133 (figure 14).

Le connecteur de raccordement est représenté en 660 sur les figures 14 et 15. Chaque connecteur de raccordement 660 comprend une pluralité de connecteurs unitaires 661 tels que ceux fabriqués par la société PHOENIX sous la référence 3246857 ou 3246858. Chaque connecteur unitaire 661 comprend deux fiches 662.1, 662.2 et pour certains une broche de sectionnement 663 en matériau électriquement isolant s'étendant entre les fiches 662.1, 662.2 parallèlement à celles-ci. Chacune des fiches 662.1, 662.2 d'un connecteur unitaire 661 est destinée à être reçue dans l'une des prises femelles 135.1, 135.2 respectivement d'un connecteur femelle de jonction 133 et la broche de sectionnement 663, lorsqu'elle est présente, est destinée à être reçue dans le puits 138 de ce connecteur femelle de jonction 133 pour écarter les contacts 137.1, 137.2 l'un de l'autre et assurer ainsi une dérivation (figure 14). Le ou les composants reliés au connecteur mâle 661 sont alors raccordés en série aux conducteurs de la canalisation auxquels le connecteur femelle de jonction 133 est relié. Ceci permet de réaliser une dérivation et est en particulier utilisé pour les conducteurs dédiés au réseau SHDSL.

A l'inverse, on comprend que, lorsque le connecteur unitaire 661 est dépourvu de broche de sectionnement 663, la connexion du connecteur unitaire 661 dans un connecteur femelle de jonction 133 n'interrompt pas la continuité électrique entre les bornes dudit connecteur femelle de jonction 133. Le ou les composants reliés au connecteur unitaire 661 sont alors raccordés en parallèle aux conducteurs de la canalisation auxquels le connecteur femelle de jonction 133 est relié. Ceci est en particulier utilisé pour les conducteurs d'alimentation.

Comme indiqué précédemment, il est aussi possible de raccorder les conducteurs électriques d'une canalisation primaire aux conducteurs d'une canalisation secondaire en disposant sur chaque canalisation un module de raccordement 130 et en reliant les deux modules de raccordement 130 l'un à l'autre avec un câble pourvu à chacune de ses extrémités d'un connecteur 660. De préférence, le module de raccordement 130 est monté à l'extrémité de la canalisation secondaire et à l'autre extrémité les conducteurs électriques de la canalisation sont reliés deux à deux pour former une boucle.

Avantageusement, comme représenté sur les figures 2 et 9, le réseau de distribution comprend un réseau de sécurité incendie comportant au moins une ligne primaire de sécurité incendie LSI' reliée à des lignes secondaires de sécurité incendie LSI''. Les lignes de sécurité incendie comprennent des canalisations comportant :
- un profilé en matériau électriquement isolant ;
- deux paires de conducteurs électriques identiques (des barres conductrices) qui s'étendent longitudinalement dans le profilé et qui sont accessibles sur une des faces principales opposées du profilé via des ouvertures ménagées à intervalles réguliers dans ladite face principale.

Un centre de commande 1000 est relié aux conducteurs électriques de la ligne primaire de sécurité incendie et des avertisseurs d'incendie 901, des détecteurs d'incendie 902, des sonneries 903 sont reliés à des conducteurs de la ligne primaire et des lignes secondaires de sécurité incendie au moyen d'un coffret de raccordement 900. Le centre de commande 1000 est relié aux automates des tableaux généraux basse tension TGBT1, TGBT2 pour leur envoyer, en cas d'alerte incendie, un signal d'arrêt interprété par les automates 200 de manière à commander un arrêt des processus en cours d'exécution par les automates 200 au moment de l'alerte. Dans ce cas, les automates 200 peuvent commander un basculement des transformateurs TC1, TC2 de l'un à l'autre, ou sur le groupe électrogène GE selon que l'un des transformateurs ou les deux sont touchés par un sinistre, puis mettre hors tension le ou les transformateurs, ou le TGBT, concerné par la détection incendie.

Le centre de commande 1000 comprend un automate programmé pour recueillir les signaux incendies issus de capteurs dédiés reliés au centre de commande 1000 et indiquer aux automates 200 la zone concernée par l'incendie. Plus précisément, il est de préférence prévu des capteurs d'alarme qui sont associés aux transformateurs TC1, TC2, et aux TGBT, c'est-à-dire soit montés directement sur lesdits transformateurs et TGBT, soit disposés dans le local hébergeant chacun des transformateurs et TGBT pour assurer des détections d'incendie, de température, de gaz et/ou de pression de gaz (dgpt2), et/ou d'inondation. Ces capteurs sont raccordés à l'automate de traitement des alarmes du centre de commande 1000 qui est agencé pour piloter via les automates 200 la substitution du transformateur non défaillant au transformateur défaillant et/ou du TGBT non défaillant au TGBT défaillant. L'architecture de l'installation à base de canalisations préfabriquées est particulièrement intéressante pour l'éloignement des transformateurs l'un de l'autre, et des TGBT l'un de l'autre, et leur substitution mutuelle sans interruption des processus en cours.

Au moins deux des conducteurs électriques des lignes primaire et secondaire de sécurité incendie sont recouvertes d'une gaine de protection thermique. L'installation comporte des sirènes réparties le long des canalisations préfabriquées de sécurité incendie et raccordées auxdits conducteurs électriques recouverts de la gaine de protection thermique.

On notera que l'invention permet de prévoir plusieurs niveaux de secours en ce qui concerne les TGBT :
- en cas défaillance de l'un des automates 200, l'autre (ou l'un des autres) automate(s) 200 se substitue à l'automate 200 défaillant ;
- en cas de défaillance de tous les automates 200, la commande des processus est prise automatiquement en charge par les passerelles AC4S des interfaces de communication. Les passerelles AS-i AC4S des interfaces de communication incorporent des automates qui sont certes moins élaborés que les automates 200 mais qui sont néanmoins agencés pour maintenir le fonctionnement des unités auxquelles les interfaces de communication sont reliées lorsqu'elles ont perdu la liaison avec les automates 200 ;
- si les passerelles AS-i AC4S sont défaillantes, on se trouve dans un mode dégradé dans lequel une alerte est envoyée à des opérateurs pour que ceux-ci interviennent sur des commandes manuelles.

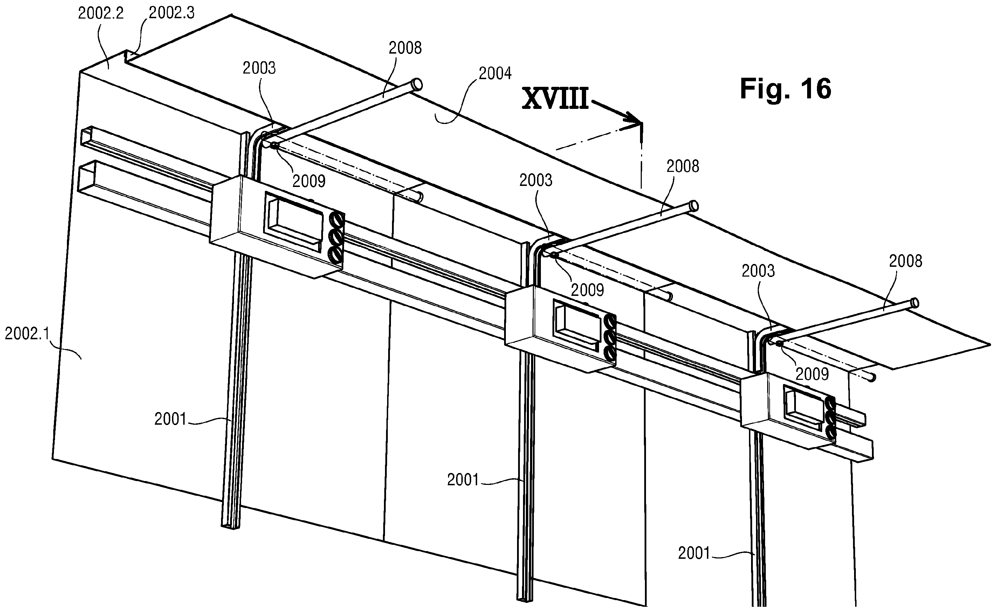

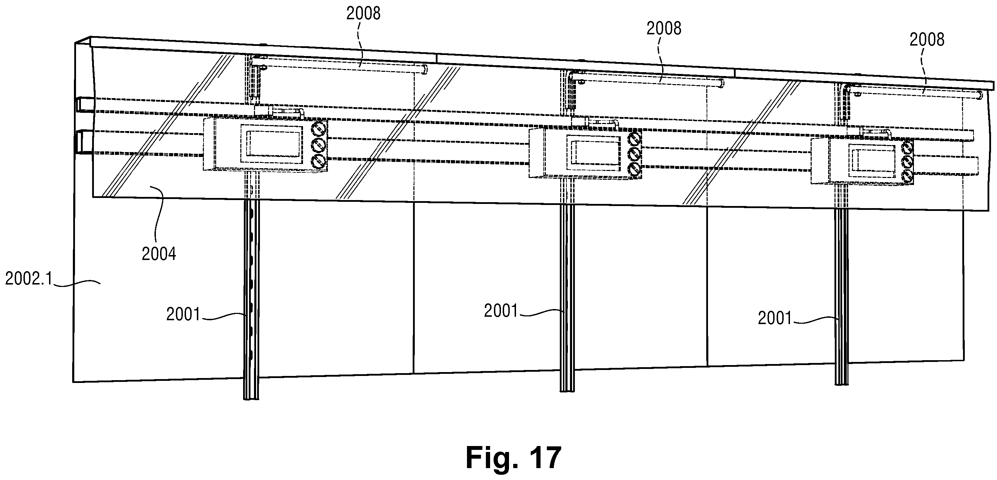

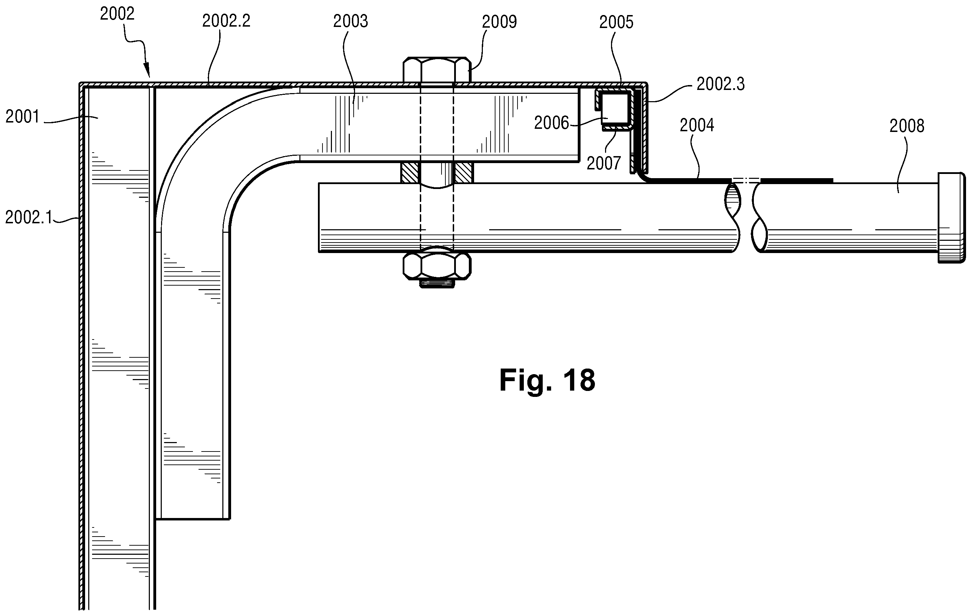

En référence aux figures 16 à 18, selon une variante de l'invention, les canalisations sont fixées à des montants 2001 verticaux qui sont eux-mêmes fixés à un mur et qui portent un carénage 2002. Le carénage 2002 comprend une paroi arrière 2002.1, une casquette 2002.2 supérieure et une paroi frontale 2002.3 moins haute que la paroi arrière 2002.1. La casquette 2002.1 est soutenue par des potences 2003 qui sont fixées chacune à un des montants 2001.

Une lame souple 2004, en matériau thermoplastique transparent, s'étend longitudinalement le long de la paroi frontale 2002.3 du carénage 2002 pour former un rideau de protection des canalisations contre les projections d'eau. Le bord longitudinal supérieur de la lame souple 2004 est fixé à une goulotte 2005 fixée au carénage 2002 de manière à plaquer le bord longitudinal supérieur de la lame souple 2004 contre une surface arrière de la paroi frontale 2002.3 et à avoir un fond plaqué contre une surface inférieure de la casquette 2002.2. La goulotte 2002 est ainsi ouverte vers le bas et reçoit un bandeau de diodes électroluminescentes 2006 retenu dans la goulotte 2005 par des pattes 2007 découpées dans le flanc de la goulotte 2005 et rabattues sur le bandeau de diodes électroluminescentes 2006. Le bandeau de diodes électroluminescentes 2006 permet d'éclairer les canalisations et les boîtiers et autres composants qui leur sont attachés mais également d'éclairer le sol lorsque les canalisations sont disposées le long de chemin de circulation.

Des tiges 2008 sont fixées aux potences 2003 par des vis 2009 formant un axe de pivotement des tiges 2003 dans un plan sensiblement horizontal entre une position escamotée sous la casquette 2002.2 et une position en saillie de la paroi frontale 2002.3 dans laquelle les tiges 2008 maintiennent la lame souple 2004 soulevée pour libérer l'accès aux boîtiers et autres composants fixés aux canalisations.

Bien entendu, l'invention n'est pas limitée aux modes de réalisation décrits mais englobe toute variante entrant dans le champ de l'invention telle que définie par les revendications.

En particulier, l'invention est applicable à tout type de processus continu.

En variante, l'interface de communication est reliée à une carte de communication reliée à l'unité consommatrice.

L'installation peut comprendre un seul transformateur d'entrée ou plus de deux transformateurs montés en parallèle pour relier l'entrée du tableau général basse tension à l'arrivée de courant.

Au lieu d'utiliser des transformateurs comme arrivées de courant, il est possible d'utiliser un groupe électrogène ou un système de cogénération.

Au moins une des unités consommatrices comprend un moteur électrique relié à un variateur lui-même relié au boîtier de raccordement et l'interface de communication est reliée au variateur pour piloter celui-ci. En variante, tout ou partie des unités consommatrices peuvent être dépourvues de variateur, voire de moteur.

Au moins une unité consommatrice de courant peut être connectée à la canalisation préfabriquée d'une des lignes primaires de puissance et à la canalisation préfabriquée d'une des lignes primaires de commande. A l'inverse, les unités consommatrices pourraient être toutes reliées aux lignes secondaires ou toutes reliées aux lignes primaires.

Les canalisations préfabriquées des lignes de commande ou de puissance peuvent avoir deux faces principales opposées et comporter huit barres conductrices accessibles par moitié sur chacune des faces principales.

Au moins une partie des canalisations préfabriquées des lignes de commande peuvent comprendre une ligne de télécommande.

Au moins une partie des canalisations préfabriquées des lignes de commande comprennent au moins deux conducteurs électriques utilisés pour former un réseau informatique de type Ethernet de préférence en anneau redondant.

En variante, il est possible de remplacer les conducteurs électriques 101'', 101‴ par des fibres optiques.

Des canalisations dédiées peuvent être utilisées pour le réseau informatique qui peut recourir à un autre protocole que le protocole Ethernet.

Dans le cas de petites installations, il est possible de se passer d'un automate maître en utilisant uniquement un automate AC4S intégré à l'interface AS-i.

En variante, il est possible de piloter le variateur d'un moteur directement via le réseau Ethernet lorsque ledit variateur possède une carte Ethernet intégrée.

Dans le cas de petites installations, les lignes secondaires peuvent être omises.

Les canalisations primaires et secondaires peuvent être différentes, comme dans le mode de réalisation décrit, ou identiques les unes aux autres et par exemple du type CANALIS KS. Cette dernière possibilité présente l'avantage de permettre l'utilisation des mêmes coffrets de raccordement sur tout le réseau.

Tout mode de raccordement est utilisable pour raccorder des canalisations préfabriquées entre elles. On utilisera néanmoins de préférence un module femelle de raccordement qui est disposé entre un premier tronçon de canalisation et un deuxième tronçon de canalisation et qui comporte :
- des premières bornes reliées aux conducteurs électriques du premier tronçon de canalisation et des deuxièmes bornes reliées aux conducteurs électriques du deuxième tronçon de canalisation ;
- des premières prises reliées chacune à une des premières bornes et des deuxièmes prises reliées chacune à une des premières bornes pour recevoir des premières fiches et des deuxièmes fiches d'un connecteur mâle ; et, avantageusement,
- des moyens pour permettre un raccordement en série ou en parallèle aux conducteurs du premier tronçon de canalisation et du deuxième tronçon de canalisation. De préférence, les moyens de raccordement en série ou en parallèle comprennent :

- des premières lames conductrices qui sont reliées chacune à une des premières bornes et qui ont chacune un premier tronçon d'extrémité s'étendant dans un puits parallèle aux prises et portant un premier contact ;
- des deuxièmes lames conductrices qui sont reliées chacune à une des deuxièmes bornes et qui ont chacune un deuxième tronçon d'extrémité s'étendant dans le puits et portant un deuxième contact en regard du premier contact ;
- des broches de sectionnement portées par le connecteur mâle de raccordement et s'étendant chacune entre deux fiches pour être engagée dans le puits de manière à écarter les contacts l'un de l'autre, les lames conductrices étant élastiquement déformables depuis un premier état dans lequel les contacts 137.1, 137.2 sont appliqués l'un contre l'autre assurant une continuité électrique entre les deux bornes vers un deuxième état dans lequel les contacts sont écartés l'un de l'autre rompant la continuité électrique entre les deux bornes.

Bien que l'invention ait été décrite en application à une installation de traitement d'eau, l'invention est applicable à tout type d'installation et par exemple une installation de déchetterie pour l'alimentation et la commande des machines de tri, des machines de convoyage... en prévoyant par exemple des arrêts d'urgence pour chaque machine.

Il est possible d'utiliser comme bus de terrain, les bus AS-i (l'interface AS-i ou AS-Interface est décrite dans la norme internationale IEC 62026-2: 2015) ou autre, comme les bus DUPLINE de la société CARLO GAVAZZI et plus particulièrement le bus DUPLINE SAFE.

En variante, en cas de défaillance de l'automate maître 200, il est possible qu'une des passerelles AC4S soit programmée pour se substituer à l'automate maître et pour commander au moins une autre des passerelles AC4S.

## Revendications

1. Installation électrique comprenant un tableau général basse tension (TGBT1, TGBT2) ayant au moins une entrée reliée à une arrivée de courant (RA1, RA2), un réseau de distribution (RD) reliant au moins une sortie du tableau général basse tension à des unités consommatrices de courant (400', 400"), le réseau de distribution comportant un réseau de puissance ayant au moins une ligne de puissance (LP1, LP1') comportant au moins une canalisation préfabriquée (100) incorporant des barres conductrices, **caractérisée en ce que** le réseau de distribution comprend : un réseau de commande comportant au moins une ligne de commande (LC1, LC'1), les unités consommatrices de courant ayant chacune au moins une entrée de puissance reliée à un boîtier de raccordement (500', 500'') à des barres conductrices de la canalisation préfabriquée de puissance, **caractérisé en ce que** chaque unité consommatrice étant associée à une interface de communication (504") reliée aux barres conductrices de la canalisation préfabriquée de la ligne de commande, au moins un automate de pilotage (200) étant relié à deux des barres conductrices de la canalisation préfabriquée de la ligne de commande via une interface de communication (300) agencée pour communiquer, via un bus de terrain de type AS-i de sous-type Safety, avec les interfaces de communication associées aux unités consommatrices.

2. Installation selon la revendication 1, dans laquelle l'interface de communication (504'') associée à au moins une des unités consommatrices (400") pilote un relais du boîtier de raccordement (500'') auquel est reliée l'entrée de puissance de l'unité consommatrice.

3. Installation selon la revendication 1, dans laquelle l'interface de communication (504'') est reliée à une carte de communication de l'unité consommatrice.

4. Installation selon l'une quelconque des revendications précédentes, dans laquelle deux des barres conductrices d'au moins une partie des canalisations préfabriquées du réseau de commande sont reliées à un dispositif d'accumulation d'énergie (ES1, ES2).

5. Installation selon l'une quelconque des revendications précédentes, dans laquelle au moins une partie des canalisations préfabriquées du réseau de commande comprennent au moins deux barres conductrices (101", 101''') utilisées pour former un réseau informatique de type Ethernet.

6. Installation selon la revendication 5, dans laquelle le réseau informatique de type Ethernet est formé sur quatre barres conductrices (101'', 101‴) de manière à former au moins une boucle redondante.

7. Installation selon la revendication 6, dans laquelle la boucle comprend un bloc de raccordement électrique qui incorpore une interface TCP/IP et qui est pourvu de connecteurs de raccordement aux barres conductrices et des connecteurs de liaison externe.

8. Installation selon la revendication 5, dans laquelle au moins les canalisations préfabriquées (100) de la ligne de commande sont pourvues d'ouvertures (110) qui sont réparties sur leur longueur et s'étendent chacune en regard des quatre barres conductrices (101", 101‴) dédiées au réseau Ethernet, deux des barres conductrices (101''') présentant une interruption en regard de chaque ouverture et chaque ouverture pouvant recevoir soit un premier capot (600) comportant deux conducteurs de liaison (601) ayant des extrémités pourvues de connecteurs pour se raccorder aux extrémités en regard d'une des barres conductrices interrompues à l'aplomb du premier capot, soit un deuxième capot (700) comportant quatre conducteurs de dérivation (701) ayant chacun une extrémité pourvue d'un connecteur pour être raccordé à une extrémité d'une des barres conductrices interrompues en regard du deuxième capot.

9. Installation selon l'une quelconque des revendications précédentes, dans laquelle le réseau de distribution comprend une ligne de sécurité incendie comportant au moins une canalisation préfabriquée incorporant des barres conductrices, une centrale incendie (1000) étant reliée aux barres conductrices de la ligne de sécurité incendie et des détecteurs d'incendie et/ou des avertisseurs d'incendie étant reliés à des barres conductrices de la ligne de sécurité incendie.

10. Installation selon la revendication 9, dans laquelle au moins deux des barres conductrices de la ligne de sécurité incendie sont recouvertes d'une gaine de protection thermique, l'installation comportant des sirènes réparties le long des lignes de sécurité incendie et raccordées auxdites barres conductrices recouvertes de la gaine de protection thermique.

11. Installation selon l'une quelconque des revendications précédentes, dans lequel au moins une des unités consommatrices comprend un moteur électrique relié à un variateur lui-même relié au boîtier de raccordement et l'interface de communication est reliée au variateur pour piloter celui-ci.

12. Installation selon l'une quelconque des revendications précédentes, comprenant au moins deux transformateurs distants, et deux tableaux généraux basse tension distants et reliés chacun à l'un des transformateurs de manière que à ce qu'ils soient substituables l'un à l'autre.

13. Installation selon la revendication précédente, comprenant un automate de traitement d'alarme relié à des capteurs associés aux transformateurs et aux tableaux généraux basse tension et agencé pour commander la substitution d'un transformateur à l'autre et/ou d'un tableau général basse tension à l'autre.

14. Installation selon la revendication précédente, agencée pour que :
- en cas défaillance de l'automate d'un des tableaux généraux basse tension, l'automate de l'autre tableau général basse tension se substitue à l'automate défaillant ;
- en cas de défaillance de tous les automates des tableaux généraux basse tension, la commande des processus est prise automatiquement en charge par les interfaces de communication, lesdites interfaces incorporant chacune une passerelle de type AC4S agencée pour maintenir le fonctionnement des unités auxquelles l'interface de communication est reliée lorsqu'elle a perdu la liaison avec les automates ;
- si les passerelles de type AC4S, une alerte soit envoyée à un opérateur pour que celui-ci intervienne sur des commandes manuelles.

15. Installation selon l'une quelconque des revendications précédentes, comprenant au moins un module femelle de raccordement qui est disposé entre un premier tronçon de canalisation et un deuxième tronçon de canalisation et qui comporte :
- des premières bornes reliées aux conducteurs électriques du premier tronçon de canalisation et des deuxièmes bornes reliées aux conducteurs électriques du deuxième tronçon de canalisation ;
- des premières prises reliées chacune à une des premières bornes et des deuxièmes prises reliées chacune à une des premières bornes pour recevoir des premières fiches et des deuxièmes fiches d'un connecteur mâle ;
- des moyens pour permettre un raccordement en série ou en parallèle aux conducteurs du premier tronçon de canalisation et du deuxième tronçon de canalisation.

16. Installation selon la revendication 15, dans laquelle les moyens de raccordement en série ou en parallèle comprennent :
- des premières lames conductrices qui sont reliées chacune à une des premières bornes et qui ont chacune un premier tronçon d'extrémité s'étendant dans un puits parallèle aux prises et portant un premier contact ;
- des deuxièmes lames conductrices qui sont reliées chacune à une des deuxièmes bornes et qui ont chacune un deuxième tronçon d'extrémité s'étendant dans le puits et portant un deuxième contact en regard du premier contact ;
- des broches de sectionnement portées par le connecteur mâle de raccordement et s'étendant chacune entre deux fiches pour être engagée dans le puits de manière à écarter les contacts l'un de l'autre, les lames conductrices étant élastiquement déformables depuis un premier état dans lequel les contacts (137.1, 137.2) sont appliqués l'un contre l'autre assurant une continuité électrique entre les deux bornes vers un deuxième état dans lequel les contacts sont écartés l'un de l'autre rompant la continuité électrique entre les deux bornes.

17. Installation selon l'une quelconque des revendications précédentes, dans laquelle le réseau de puissance comprend une ligne primaire de puissance (LP1) comportant au moins une canalisation préfabriquée (100) incorporant des barres conductrices auxquelles sont reliées des barres conductrices d'au moins une canalisation préfabriquée d'une ligne secondaires de puissance (LP1') ; et le réseau de commande comprend au moins une ligne primaire de commande (LC1) comportant au moins une canalisation préfabriquée incorporant des barres conductrices auxquelles sont reliées des barres conductrices d'au moins une canalisation préfabriquée d'une ligne secondaire de commande (LC'1) ; chaque unité consommatrice étant associée à une interface de communication (504'') reliée aux barres conductrices de la canalisation préfabriquée de la ligne secondaire de commande, au moins un automate de pilotage (200) étant relié à deux des barres conductrices de la canalisation préfabriquée de la ligne primaire de commande via une interface de communication (300) pour communiquer via un bus avec les interfaces de communication associées aux unités consommatrices.

## Patentansprüche

1. Elektrische Anlage, die eine Haupt-Niederspannungsschaltanlage (TGBTl, TGBT2) umfasst, welche mindestens einen Eingang aufweist, der mit einer Stromzufuhr (RAl, RA2) verbunden ist, und ein Verteilnetz (RD), das mindestens einen Ausgang der Haupt-Niederspannungsschaltanlage mit Stromverbrauchereinheiten (400', 400ʺ) verbindet, wobei das Verteilnetz ein Leistungsnetz enthält, das mindestens eine Leistungsleitung (LPl, LPl') aufweist, welche mindestens eine vorgefertigte Leitung (100) mit integrierten Sammelschienen umfasst, **dadurch gekennzeichnet, dass** das Verteilnetz Folgendes umfasst : ein Steuerungsnetz, das mindestens eine Steuerleitung (LCl, LC'1) aufweist, wobei die Stromverbrauchereinheiten jeweils mindestens einen Leistungseingang besitzen, der über ein Anschlussgehäuse (500', 500'') mit den Sammelschienen der vorgefertigten Leistungsleitung verbunden ist, **dadurch gekennzeichnet, dass** jede Verbrauchereinheit mit einer Kommunikationsschnittstelle (504'') verbunden ist, die mit den Sammelschienen der vorgefertigten Steuerleitung verbunden ist, wobei mindestens ein Steuergerät (200) über eine Kommunikationsschnittstelle (300) mit zwei der Sammelschienen der vorgefertigten Steuerleitung verbunden ist, die so angeordnet ist, dass sie über einen Feldbus vom Typ AS-i des Subtyps Safety mit den an die Verbrauchereinheiten angeschlossenen Kommunikationsschnittstellen kommuniziert.

2. Anlage nach Anspruch 1, wobei die Kommunikationsschnittstelle (504'') von mindestens einer der Verbrauchereinheiten (400'') ein Relais des Anschlussgehäuses (500") steuert, an das der Leistungseingang der Verbrauchereinheit angeschlossen ist.

3. Anlage nach Anspruch 1, wobei die Kommunikationsschnittstelle (504'') mit einer Kommunikationskarte der Verbrauchereinheit verbunden ist.

4. Anlage nach einem der vorstehenden Ansprüche, wobei zwei der Sammelschienen von zumindest einem Teil der vorgefertigten Leitungen des Steuerungsnetzes mit einer Energiespeichereinrichtung (ESl, ES2) verbunden sind.

5. Anlage nach einem der vorstehenden Ansprüche, wobei zumindest ein Teil der vorgefertigten Leitungen des Steuerungsnetzes mindestens zwei Sammelschienen (101", 101‴) aufweist, die zur Bildung eines Ethernet-Netzwerks verwendet werden.

6. Anlage nach Anspruch 5, wobei das Ethernet-Netzwerk über vier Sammelschienen (101", 101"') gebildet ist, sodass mindestens eine redundante Schleife entsteht.

7. Anlage nach Anspruch 6, wobei die Schleife einen Anschlussblock umfasst, der eine TCP/IP-Schnittstelle integriert und mit Anschlussklemmen für die Sammelschienen sowie mit externen Verbindungskonnektoren versehen ist.

8. Anlage nach Anspruch 5, wobei zumindest die vorgefertigten Leitungen (100) der Steuerleitung mit Öffnungen (110) versehen sind, die über ihre Länge verteilt sind und jeweils gegenüber den vier für das Ethernet-Netzwerk vorgesehenen Sammelschienen (101'', 101‴) liegen, wobei zwei der Sammelschienen (101‴) jeweils gegenüber jeder Öffnung angeordnet sind und jede Öffnung entweder eine erste Abdeckung (600) aufnimmt, die Verbindungsleiter (601) enthält, die in der Öffnung unterbrochen sind und zwei Enden mit Steckverbindern zum Anschluss an die gegenüberliegenden Enden einer der unter der ersten Abdeckung unterbrochenen Sammelschienen aufweist, oder eine zweite Abdeckung (700) aufnimmt, die vier Ableitungsleiter (701) enthält, von denen jeder ein Ende mit einem Steckverbinder zum Anschluss an ein Ende einer der unter der zweiten Abdeckung unterbrochenen Sammelschienen aufweist.

9. Anlage nach einem der vorstehenden Ansprüche, wobei das Verteilnetz eine Brandmeldeleitung umfasst, die mindestens eine vorgefertigte Leitung mit integrierten Sammelschienen aufweist, wobei eine Brandzentrale (1000) mit den Sammelschienen der Brandmeldeleitung verbunden ist und Brandmelder und/oder Feuerwarngeber mit Sammelschienen der Brandmeldeleitung verbunden sind.

10. Anlage nach Anspruch 9, wobei mindestens zwei der Sammelschienen der Brandmeldeleitung mit einer wärmebeständigen Schutzummantelung überzogen sind, und die Anlage Sirenen umfasst, die entlang der Brandmeldeleitungen angeordnet und an die genannten mit Schutzummantelung versehenen Sammelschienen angeschlossen sind.

11. Anlage nach einem der vorstehenden Ansprüche, wobei mindestens eine der Verbrauchseinheiten einen Elektromotor aufweist, der mit einem Frequenzumrichter verbunden ist, welcher wiederum mit dem Anschlussgehäuse verbunden ist, und die Kommunikationsschnittstelle mit dem Frequenzumrichter verbunden ist, um diesen zu steuern.

12. Anlage nach einem der vorstehenden Ansprüche, umfassend mindestens zwei räumlich getrennte Transformatoren und zwei räumlich getrennte Haupt-Niederspannungsschaltanlagen, die jeweils mit einem der Transformatoren verbunden sind, sodass sie gegeneinander austauschbar sind.

13. Installation nach dem vorhergehenden Anspruch, mit einem für die Alarmverarbeitung vorgesehenen Steuergerät, das mit Sensoren verbunden ist, die den Transformatoren und den Haupt-Niederspannungsschaltanlagen zugeordnet sind, und das so ausgelegt ist, den Austausch eines Transformators gegen den anderen und/oder den Austausch einer Haupt-Niederspannungsschaltanlage gegen eine andere zu steuern.

14. Installation nach dem vorhergehenden Anspruch, so eingerichtet, dass
- im Falle eines Ausfalls des Steuergeräts einer der Haupt-Niederspannungsschaltanlagen tritt das Steuergerät der anderen Haupt-Niederspannungsschaltanlage an die Stelle des ausgefallenen Steuergeräts
- im Falle des Ausfalls aller Steuergeräte der Haupt-Niederspannungsschaltanlagen wird die Prozesssteuerung automatisch von den Kommunikationsschnittstellen übernommen, wobei diese Schnittstellen jeweils ein Gateway vom Typ AC4S enthalten, das so ausgelegt ist, den Betrieb der Einheiten, mit denen die jeweilige Kommunikationsschnittstelle verbunden ist, aufrechtzuerhalten, wenn sie die Verbindung zu den Steuergeräten verloren hat;
- wenn es sich um Gateways vom Typ AC4S handelt, wird eine Warnung an einen Bediener gesendet, damit dieser manuell eingreift.

15. Anlage nach einem der vorstehenden Ansprüche, mit mindestens einem weiblichen Anschlussmodul, das zwischen einem ersten Leitungsabschnitt und einem zweiten Leitungsabschnitt angeordnet ist und das Folgendes aufweist :
- erste Klemmen, die mit den elektrischen Leitern des ersten Leitungsabschnitts verbunden sind, und zweite Klemmen, die mit den elektrischen Leitern des zweiten Leitungsabschnitts verbunden sind;
- erste Buchsen, die jeweils mit einer der ersten Klemmen verbunden sind, und zweite Buchsen, die jeweils mit einer der ersten Klemmen verbunden sind, um erste Stifte und zweite Stifte eines männlichen Steckverbinders aufzunehmen;
- Mittel, die einen Anschluss in Reihe oder parallel an die Leiter des ersten Leitungsabschnitts und des zweiten Leitungsabschnitts ermöglichen.

16. Anlage nach Anspruch 15, wobei die Mittel für einen Reihen- oder Parallelanschluss Folgendes umfassen:
- erste Leiterlamellen, die jeweils an eine der ersten Klemmen angeschlossen sind und jeweils einen ersten Endabschnitt aufweisen, der in einem parallel zu den Buchsen verlaufenden Schacht liegt und einen ersten Kontakt trägt;
- zweite Leiterlamellen, die jeweils an eine der zweiten Klemmen angeschlossen sind und jeweils einen zweiten Endabschnitt aufweisen, der in den Schacht hineinragt und gegenüber dem ersten Kontakt einen zweiten Kontakt trägt;
- Abtrennstifte, die vom männlichen Anschlussstecker getragen werden und sich jeweils zwischen zwei Stiften erstrecken, sodass sie in den Schacht eingeführt werden, um die Kontakte voneinander zu spreizen, wobei die Leiterlamellen elastisch verformbar sind von einem ersten Zustand, in dem die Kontakte (137.1, 137.2) gegeneinander anliegen und so eine elektrische Verbindung zwischen den beiden Klemmen herstellen, zu einem zweiten Zustand, in dem die Kontakte voneinander entfernt sind und die elektrische Verbindung zwischen den beiden Klemmen unterbrochen wird.

17. Anlage nach einem der vorstehenden Ansprüche, wobei das Leistungsnetz eine primäre Leistungsleitung (LPl) umfasst, die mindestens eine vorgefertigte Leitung (100) mit Sammelschienen enthält, an die Sammelschienen von mindestens einer vorgefertigten Leitung einer sekundären Leistungsleitung (LPl') angeschlossen sind, und das Steuerungsnetz mindestens eine primäre Steuerleitung (LC1) umfasst, die mindestens eine vorgefertigte Leitung mit Sammelschienen enthält, an die Sammelschienen von mindestens einer vorgefertigten Leitung einer sekundären Steuerleitung (LC'1) angeschlossen sind, wobei jede Verbrauchereinheit mit einer Kommunikationsschnittstelle (504'') verbunden ist, die an die Sammelschienen der vorgefertigten Leitung der sekundären Steuerleitung angeschlossen ist, und wobei mindestens ein Steuergerät (200) über eine Kommunikationsschnittstelle (300) mit zwei der Sammelschienen der vorgefertigten Leitung der primären Steuerleitung verbunden ist, um über einen Bus mit den Kommunikationsschnittstellen der Verbrauchereinheiten zu kommunizieren.

## Claims

1. Electrical installation comprising a low-voltage main switchboard (TGBTl, TGBT2) having at least one inlet connected to a power supply (RAl, RA2), a distribution network (RD) connecting at least one outlet of the low-voltage main switchboard to consumer units (400', 400''), the distribution network comprising a power network having at least one power line (LPl, LPl') comprising at least one prefabricated trunking (100) incorporating busbars, **characterised in that** the distribution network comprises: a control network comprising at least one control line (LCl, LC'1), the consumer units each having at least one power inlet connected to a junction box (500', 500'') to busbars of the prefabricated power trunking, **characterised in that** each consumer unit is associated with a communication interface (504'') connected to the busbars of the prefabricated trunking of the control line, at least one controller (200) being connected to two of the busbars of the prefabricated trunking of the control line via a communication interface (300) arranged to communicate, via an AS-i-type fieldbus of Safety subtype, with the communication interfaces associated with the consumer units.

2. Installation according to claim 1, wherein the communication interface (504'') of at least one of the consumer units (400'') controls a relay of the junction box (500") to which the power inlet of the consumer unit is connected.

3. Installation according to claim 1, wherein the communication interface (504'') is connected to a communication card of the consumer unit.

4. Installation according to any one of the preceding claims, wherein two of the busbars of at least a part of the prefabricated trunking of the control network are connected to an energy storage device (ESl, ES2).

5. Installation according to any one of the preceding claims, wherein at least a portion of the prefabricated trunking of the control network comprises at least two busbars (101" , 101‴) used to form an Ethernet network.

6. Installation according to claim 5, wherein the Ethernet network is formed on four busbars (101", 101‴) so as to form at least one redundant loop.

7. Installation according to claim 6, wherein the loop comprises an electrical terminal block that incorporates a TCP/IP interface and is provided with connectors for connection to the busbars and with external link connectors.

8. Installation according to claim 5, wherein at least the prefabricated trunking (100) of the control line are provided with openings (110) distributed along their length, each opening extending opposite the four busbars (101'', 101‴) dedicated to the Ethernet network; two of the busbars are opposite each opening, and each opening receives either a first cover (600) comprising linking conductors (601) interrupted at the opening, the first cover possibly having two ends fitted with connectors to connect to the ends opposite one of the interrupted busbars aligned with the first cover, or a second cover (700) comprising four branch conductors (701), each having an end fitted with a connector for connection to an end of one of the interrupted busbars opposite the second cover.

9. Installation according to any one of the preceding claims, wherein the distribution network comprises a fire safety line comprising at least one prefabricated trunking incorporating busbars, a fire control panel (1000) being connected to the busbars of the fire safety line and fire detectors and/or fire alarms being connected to busbars of the fire safety line.

10. Installation according to claim 9, wherein at least two of the busbars of the fire safety line are covered with a thermal protective sheath, the installation comprising sirens distributed along the fire safety lines and connected to said busbars covered with the thermal protective sheath.

11. Installation according to any one of the preceding claims, wherein at least one of the consumer units comprises an electric motor connected to a variable-speed drive which is itself connected to the junction box and the communication interface is connected to the drive to control it.

12. Installation according to any one of the preceding claims, comprising at least two remote transformers, and two remote low-voltage main switchboards each connected to one of the transformers such that they are interchangeable with each other.

13. Installation according to the previous claim, comprising an alarm processing controller connected to sensors associated with the transformers and the low-voltage main switchboards and arranged to command the substitution of one transformer for another and/or of one low-voltage main switchboard for another.

14. Installation according to the previous claim, arranged so that
- in the event of failure of the controller of one of the low-voltage main switchboards, the controller of the other low-voltage main switchboard takes over for the failed controller
- in the event of failure of all the controllers of the low-voltage main switchboards, process control is automatically taken over by the communication interfaces, said interfaces each incorporating an AC4S-type gateway arranged to maintain the operation of the units to which the communication interface is connected when it has lost the link with the controllers ;
- if the AC4S-type gateways fail, an alert is sent to an operator so that the operator can intervene on manual controls.

15. Installation according to any one of the preceding claims, comprising at least one female connection module which is arranged between a first section of prefabricated trunking and a second section of prefabricated trunking and which comprises :
- first terminals connected to the electrical conductors of the first section of prefabricated trunking and second terminals connected to the electrical conductors of the second section of prefabricated trunking;
- first sockets each connected to one of the first terminals and second sockets each connected to one of the second terminals to receive first plugs and second plugs of a male connector;
- means to allow a series or parallel connection to the conductors of the first trunking section and of the second trunking section.

16. Installation according to claim 15, in which the means for series or parallel connection comprise:
- first conductive blades each connected to one of the first terminals and each having a first end section extending into a well parallel to the sockets and bearing a first contact;
- second conductive blades each connected to one of the second terminals and each having a second end section extending into the well and bearing a second contact opposite the first contact;
- isolating pins carried by the male mating connector and each extending between two prongs to be engaged in the well so as to separate the contacts from one another, the conductive blades being elastically deformable from a first state in which the contacts (137.1, 137.2) are pressed against one another ensuring electrical continuity between the two terminals to a second state in which the contacts are separated from one another breaking the electrical continuity between the two terminals.

17. Installation according to any one of the preceding claims, in which the power network comprises a primary power line (LPl) comprising at least one prefabricated trunking (100) incorporating busbars to which are connected busbars of at least one prefabricated trunking of a secondary power line (LPl') and the control network comprises at least one primary control line (LC1) comprising at least one prefabricated trunking incorporating busbars to which are connected busbars of at least one prefabricated trunking of a secondary control line (LC'1), each consumer unit being associated with a communication interface (504'') connected to the busbars of the prefabricated trunking of the secondary control line, at least one controller (200) being connected to two of the busbars of the prefabricated trunking of the primary control line via a communication interface (300) to communicate via a bus with the communication interfaces associated with the consumer units.
